# EUROPEAN PATENT APPLICATION

(11) **EP 4 387 168 A1**
(43) Date of publication of application: **19.06.2024**
(21) Application number: 22383219.7
(22) Date of filing: 15.12.2022
(51) Int. Cl.: H04L 9/40, H04L 9/32, H04W 8/06, H04W 8/12, H04W 8/18, H04W 8/20, H04W 8/26, H04W 12/06, H04W 12/72, H04W 12/75, H04W 60/04

(54) **SECURED EXCHANGE OF DATA BETWEEN AN IOT DEVICE AND AN IOT BACKGROUND SYSTEM OVER THE ATTACH PROCEDURE OF A MOBILE COMMUNICATION NETWORK**

(71) Applicant: Giesecke+Devrient Mobile Security Germany GmbH, 81677 München (DE)
(72) Inventor: Forconesi, David Rodolfo, 08820 El Prat de Llobregat (Barcelona) (ES)
(74) Representative: Giesecke+Devrient IP

(57) **Abstract**

A method for secured exchange of data between an loT device and an loT background system over a mobile communication network, comprises the steps: a) ([4]) By the device provide data-read (DATA-READ) to the SIM; b) ([5]) By the SIM, provide a BOOT-IMSI to the device; c) ([6]) By the device, send an attach request using the BOOT-IMSI to the loT background system over the mobile communication network; d) ([7]) By the loT background system, provide, particularly receive or generate, a random SEED, and send to the SIM over the mobile communication network a challenge message for a challenge-response authentication procedure, the challenge message comprising the random SEED, RAND, AUTN; e) ([8]) By the SIM:
- create a packet including the data-read (DATA-READ); - create an authentication error message and send the packet to the loT background system over the mobile network in the authentication error message; f) At the loT background system:
- receive the packet and extract the data-read (DATA-READ).

## Description

### Field of the invention

The present invention relates to secured exchange of data between an loT device and an loT background system over a mobile (wireless) communication network over the attach procedure.

### Background of the invention and prior art

The world is connected and is rapidly getting more connected. An example of exchange of data between an loT device and an loT background system over a mobile (wireless) communication network, is the sending of data, which can be captured sensor data of a sensor of the device, or other data present at the device, to a background system. Herein, in a typical loT scenario, a sensor device captures sensor data and transfers the captured sensor data over a mobile communication network to an loT background system for processing the sensor data for variable purposes. The captured sensor data can be for example temperature or humidity reading, motion detection events, GPS coordinates, data indicative of an accident that occurred, or an amount of a consumable, like gas, water or current, corresponding to the captured sensor data. Also for other data or information present at the device, for example on a functionality status of the device, it can be wished or required to send the data or information from the device towards the loT background system. Another example of exchange of data between an loT device and an loT background system over a mobile (wireless) communication network, is the sending of data, for example software updates or commands, from the background system over the mobile communication network to the loT device. Particularly, when an loT device reports to the loT background system a functionality error, and no sensor data as would be expected by the loT background system, the loT background system may be wanted or required to reply back to the loT device with data or information, particularly software codes, for error correction.

For a secured communication over the mobile communication network, a mobile communication is required to include a subscriber identity module, SIM, including at least one subscription profile. The subscription profile is a set of subscription data, including at least the International Mobile Subscriber Identity, IMSI, and the network authentication key Ki, and a profile number, ICCID. The profile enables the mobile communication device to authenticate the mobile communication device versus the mobile communication network.

For attaching to a mobile communication network, a challenge-response authentication procedure is performed in which the IMSI is used. Herein, the mobile device sends to a mobile network background system sends, over the mobile communication network, a network attach request. The mobile network background system sends to the mobile device over the mobile communication network an authentication challenge. The mobile communication device generates an authentication response making use of the received challenge an a secret cryptographic key of the SIM. Only after successful execution of the challenge-response authentication, the exchange of data between the mobile communication device and the mobile network background system begins. The attach procedure is part of the signaling mechanism.

Due to the required authentication procedure, before the actual exchange of data can commence, the secured exchange of data in an loT environment is slow. In addition, an IMSI needs to be assigned for each mobile communication device, and the number of available IMSIs is limited, and in addition, each assignee IMSI costs an amount of money. Sometimes, the amount of data to be transmitted (sent) between the loT device and the loT background system is small. Therefore the overhead for attach and authentication as compared to the small amount of data to be transmitted is large and can be hard to accept.

Another typical scenario of loT devices is that a device is kept in a less operational mode of restricted operation, such as a stand-by-mode or sleep-mode, and enters, by a wake-up event into a more-operational or full-operational mode only when communication with the loT background system is required.

For subscriber identity modules, SIMs, a variety of form factors is known, including a plug-in SIM card also referred to as UICC, an embedded SIM also referred to as eUICC, and an integrated SIM also referred to as iUICC and being integrated into a chip of a chipset of the mobile communication device hosting the SIM.

The document [1] ETSI TS 124 008 V13.7.0 (2016-10) titled "Digital cellular telecommunications system (Phase 2+) (GSM); Universal Mobile Telecommunications System (UMTS); LTE; Mobile radio interface Layer 3 specification; Core network protocols; Stage 3", also referred to as 3GPP TS 24.008 version 13.7.0 Release 13, from the prior art describes in chapter 4.3.2 titled "Authentication procedure" the procedure of authentication between a mobile communication device and an mobile communication background system communicating over an LTE (long term evolution) communication network. According to chapter 9.2.2, an Authentication Request from the background system to the mobile communication device comprises two authentication parameters, namely a Challenge RAND, and an Authentication Token AUTN. More specifically, chapter 4.3.2.5.1 titles "Authentication not accepted by the MS" discloses that the mobile communication device, MS, can reject an authentication challenge message received from the mobile communication background system, and return an Authentication Failure Message to the background system, in case the authentication challenge message from the background system comprises a faulty Authentication Token AUTN.

The document [2] EP2533485B1 from the prior art discloses a method for sending subscription data, particularly an IMSI, from a mobile network background system via a mobile network downlink to a mobile station including a mobile device and an eUICC hosted in the mobile device during the attach procedure. The subscription data, particularly IMSI, are sent to the mobile station in a Challenge sent from the background system to the mobile station as part of a Challenge-Response Authentication system to authenticate the subscriber, who a holder of the mobile station versus the mobile network. For attaching to the mobile network, so as to initiate receiving the IMSI in the Challenge later, the mobile station makes us of a preliminary IMSI, PIMSI. PIMSls are sometimes also referred to as BOOT-IMSIs.

The document [3] US10911937B2 from the prior art discloses a further method for sending a temporary IMSI from a wireless (mobile) network background system via a wireless (mobile) network downlink to an eUICC embedded in a wireless (mobile) communication device during the attach procedure. Herein, the temporary IMSI is sent to the wireless communication device in either the Challenge field RAND or in the Authentication field AUTN of a challenge sent from the a wireless network background system via the wireless network to the eUICC embedded in the wireless communication device, as part of a challenge-response authentication procedure. Before the temporary IMSI is sent to the wireless communication device, the wireless network background system requests the wireless device to provide its identity. The eUICC/wireless device replies to the wireless network background system with an authentication synchronization failure message comprising an identifier of the wireless communication device or of a profile contained in the eUICC. To initially attach to the wireless communication network, the wireless communication device makes use of a BOOT-IMSI randomly selected out of a range of BOOT-IMSIs available in the eUICC of the device.

### Objective of the invention

It is an object of the present invention to provide a method allowing a fast secured exchange of data between an loT device and an loT background system over a mobile (wireless) communication network using the attach procedure.

### Summary of the invention

The object of the invention is achieved by a method with the following features, according to claim 1. Embodiments of the invention are presented in dependent claims.

The method according to claim 1 comprises an attach request sent from a SIM hosted in an loT device, herein making use of a BOOT-IMSI, however no individually assigned IMSI like a temporary IMSI or permanent IMSI. Therefore, no blocking of individually assigned IMSIs is required. The method further comprises sending data (data-read) of the loT device from its SIM in a data field of an authentication error message replied uplink from the SIM to the loT background system. Therefore, fulfilment of the entire attachment and authentication procedure is not required to enable sending the data uplink to the background system, however sending the data is performed in parallel to a not completed attach and authentication procedure. Therefore the method of claim 1 allows a fast secured exchange of data between an loT device and an loT background system over a mobile (wireless) communication network.

In combination with the present invention, data can be either data-read or data-write. Herein, data-read are any data originally present at the loT device or at the SIM, and are to be sent to the loT background system (thus sent in direction uplink), whereas data-write are any data originally present at the loT background system and to be sent to the loT device or/and to the SIM (thus sent direction downlink).

The present invention is suitable particularly for sending smaller amounts of data. For sending larger amounts of data, the method can be repeated several times.

The usage of a Boot-IMSI alone is known and can be performed for example similar to the usage of a BOOT-IMSI as described in [3] US10911937B2.

In greater detail, the present invention provides for a method for secured exchange of data between an loT device and an loT background system over a mobile communication network. The loT device comprises an interface constructed to allow exchange of data with the loT background system over a mobile communication network. The loT device further hosts a SIM constructed to authenticate the loT device versus the mobile communication network. The SIM can be of any suitable form factor including plugin SIM card, eUICC and iUICC. The SIM provides of at least one BOOT-IMSI, preferably of a pool of BOOT-IMSIs from which one BOOT-IMSI can randomly be selected.

The method comprises the steps:
a) By the loT device, provide data-read to the SIM;
b) By the SIM, provide a BOOT-IMSI to the loT device;
c) By the loT device, send an attach request using the BOOT-IMSI to the loT background system over the mobile communication network;
d) By the loT background system, provide, particularly receive or generate, a random SEED, and send to the SIM over the mobile communication network a challenge message for a challenge-response authentication procedure, the challenge message comprising the random SEED, the SEED particularly being comprised in the RAND field or/and the AUTN field of the challenge message, and can particularly be distributed over RAND and AUTN if required;
e) By the SIM:
   - create a packet including the data-read;
   - create an authentication error message and send the packet to the loT background system over the mobile network in the authentication error message.
f) At the loT background system:
   - receive the packet and extract the data-read.

The data-read (data-read are understood to be any kind of data to be transmitted uplink from the loT device to the loT background system) can hereby be transmitted (sent) from the loT device to the loT background system with little communication overhead.

For security reasons, the data to be sent (data-read or data-write) might want to be sent in an encrypted form. According to an embodiment of the invention directed to encrypted sending of data, the SIM further provides of a secret device key, Kd, of the loT device, which is derived from a Masterkey, Km, which is available to the loT background system, and a device identifier, Device-ID, of the loT device.

In this encrypted embodiment, step e) is performed as: e) By the SIM:
- derive a session key, Ks, based on the device key, Kd, and the received SEED;
- create a ciphertext by encrypting, with the session key, Ks, at least the data-read;
- create a packet including: the device identifier, Device-ID, and the ciphertext;
- create an authentication error message and send the packet to the loT background system over the mobile network in the authentication error message.

In addition, step f) is performed as: f) At the loT background system:
- receive the packet and extract the device identifier, Device-ID;
- derive the device key, Kd, using the device identifier, Device-ID and a Master Key, Km, from which the device key, Kd, is derived (has been derived previously);
- derive the session key, Ks, from the derived device key, Kd and the SEED;
- decrypt the ciphertext with the derived session key Ks and extract the data-read.

According to some embodiments, the data-read comprise one or several of the following data:
- captured sensor data captured at a sensor comprised in or at the loT device;
- status information of the loT device or/and of the SIM;
- a notification message.

The status information or the notification can for example be sent either together with captured sensor data, or instead of captured sensor data in case of a malfunction of the sensor.

In some embodiments only status information or notifications are sent from the loT device to the loT background system.

According to some embodiments step a), to provide data-read to the SIM, is triggered by a trigger event. Herein, the trigger event preferably is or comprises one of, or a combination of several of, the following:
- a wake-up event of the loT device, comprising switching the loT device from a less operational operation, particularly a stand-by or sleep operation mode, to a more operational operation mode, particularly a full-operational operation mode;
- receipt of sensor data at a sensor comprised in or at the loT device;
- a wake-up event of the SIM, comprising switching the SIM from a less operational operation, particularly a stand-by operation mode, to a more operational operation mode, particularly a full-operational operation mode;
- a request of the loT device to provide the data-read to the SIM (push-data to SIM);
- a request of the SIM to provide the data-read to the SIM (pull-data to SIM).

According to some embodiments, the BOOT-IMSI is randomly selected from a range of BOOT-IMSls provided in the SIM.

According to some embodiments, the BOOT-IMSI, or all BOOT-IMSIs from the range of BOOT-IMSIs, respectively, are registered with the loT background system as allowable BOOT-IMSIs for bootstrap attaching to the mobile communication network.

According to some embodiments, the method comprises the further step of sending back to the loT device data-write, by:
g) At the loT background system, retrieve data-write to be provided to the SIM, and send the data-write to the SIM in a challenge message for a further challenge-response authentication procedure, the challenge message comprising the data-write in the RAND data field or the AUTN data field of the challenge message, wherein the data-write comprise one or several of:
- commands to be executed by the SIM or by the loT device;
- actions to be triggered by the SIM or by the loT device;
- information to be displayed, stored or processed or manipulated in the loT device;
- software or software updates to be installed in the SIM or in the loT device.

According to some embodiments, the data-write are encrypted with the session key Ks prior to sending to the SIM or loT device.

According to some embodiments, the loT background system comprises at least:
- a Host network server receiving the request of step c), sending the challenge message of step d), and receiving the packet of step f);
- an loT Provider server installed for managing data-read and in case of claim 6 for providing data-write.

According to some embodiments, in step e), the packet is sent in a data field AUTS of the authentication error message.

According to some embodiments, an additional signature check is performed. For this, in step e), for creating the ciphertext, a signature is generated. The signature can be a signature over the (full) data-read. The signature can be a signature over a data hash, wherein the data hash was produced by applying a hash function over the data-read. The signature can be directly a data hash using a hash function over the data-read. Both the data-read and the signature are encrypted with the session key Ks. In step f), the signature is checked, i.e. verified, e.g. by inverse signature operation (e.g. decrypt operation), or in the case of directly a data hash, by re-calculating the data hash.

According to some embodiments, in case the BOOT-IMSI sent in step c) causes a collision with a BOOT-IMSI already attached to the mobile communication network, the SIM selects, particularly randomly SELECTS, a BOOT-IMSI again and starts the procedure from step b) on again, until a non-colliding BOOT-IMSI is chosen.

According to some embodiments, the device key, Kd, is a symmetric key securely stored in the SIM that preferably doesn't leave the SIM.

According to some embodiments, the device key, Kd, is derived from a Masterkey, Km, and a device identifier, Device-ID, of the loT device.

According to some embodiments, the inventive method is executed several times in sequence to send an amount of data-read or/and data-write which is too large to send said amount in one single execution of the method.

The invention has the following advantages.

The standard attachment procedure of the cellular network (mobile communication network) can be used, herein however according to the invention making use of the attach and authentication procedure for an exchange of information over the signaling mechanisms hosting the attachment procedure.

The attachment procedure will not be successfully completed in terms of the standard mechanism, nevertheless the messages exchanged during the process will allow to securely send a limited amount of information between the device and the loT background system.

The present solution can help to dramatically reduce connectivity costs. Since attachment to the network will never be completed, no permanent IMSI cost is incurred, and no traditional services are being used (Calls, Data, SMS).

The present solution can help to dramatically increase the connectivity speed and also in reducing development costs. The solution is very simple: no APN, PLMN list, permanent IMSI allocation or complex business logics are required to be executed and implemented.

Instead of limiting to just provide connectivity, the present solution enables the data to be exchanged from any loT device to any loT application. The present solution enables the loT provider to deploy their own applications on top of the loT background system platform. As well is also possible to use the loT background system platform as a connectivity gateway.

In some preferred embodiments, the present solution can help in leveraging the security provided by a secure element of a SIM oriented ecosystem to store the keys and encrypt the data to be transmitted over the air.

In some preferred embodiments, the use of eOS standardized interfaces allows to easily make this application compatible with different UICC manufacturers.

This solution is particularly suitable, but not limited to:
- loT sensors which send small data packages (few bytes per interaction) i.e.
   o Such as temperature and humidity reading
   o Motion detection events
   o Send GPS coordinates, and so on
- When extensive global coverage is required
   o Global coverage will be supported through cellular based solutions
- Data exchange triggered by a device wakeup event
   o Time based or sensor based events
   o Trigger an action from the device towards the network while sending specific information at the same time, such as pull a server connection
- Many devices available sending data in low frequency rates
- When the device wakes-up and sends data to the server, it is also possible to send information back to the sensor, which implies
   o Bidirectional communication
   o On the response is it also possible to indicate to the loT device a next wake-up timestamp for a next wake-up event as a trigger event to provide data from the loT device to the SIM for sending to the loT background system.

### Brief description of the drawings

Embodiments of the invention will now be described with reference to the accompanying drawings, throughout which like parts are referred to by like references, and in which represents:
- Fig. 1: a partial network attach and authentication procedure used to send captured sensor data or other data, or any other information to be transmitted from an loT device to an loT background system over a mobile communication network, as well as to send data back to the loT device, according to an embodiment of the invention;
- Fig. 2: an illustration of a key derivation scheme, according to a partial aspect of some embodiments of the invention.

### Detailed description of the invention

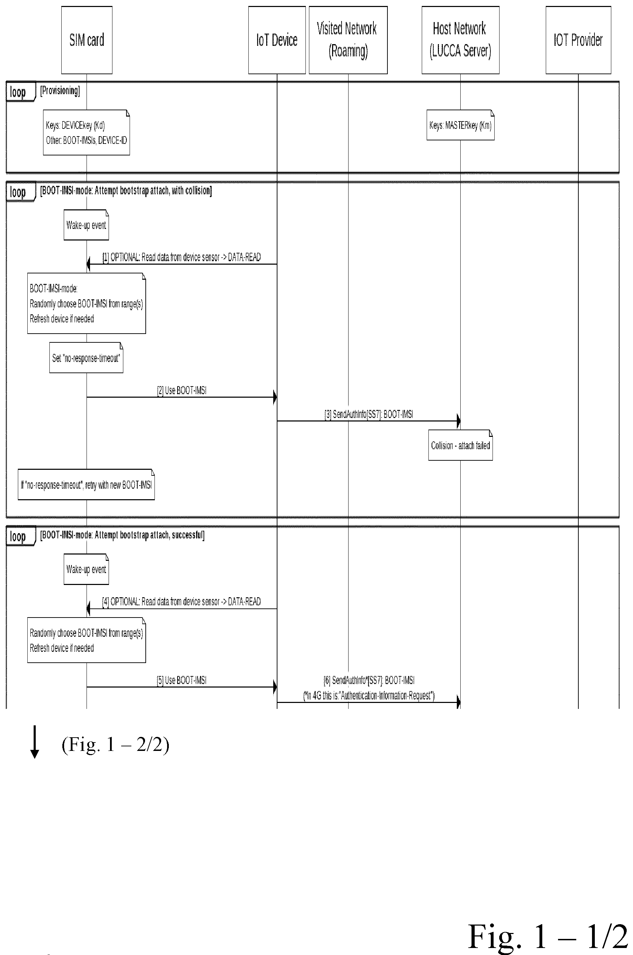

Fig. 1 shows a partial network attach and authentication procedure used to send captured sensor data or any other data or information to be transmitted from an loT device to an loT background system over a mobile communication network, and to send write-data back to the loT device, according to an embodiment of the invention.

The method involves a SIM card, as an exemplary SIM, which can alternatively be an eUICC or iUICC. The method involves an loT device, or briefly device. The device comprises a sensor constructed to capture sensor data, and an interface constructed to allow exchange of data with an loT background system over a mobile communication network which comprises a Visited Network. The method involves the loT background system which in turn comprises a Host Network server and an loT Provider server.

The SIM card hosted in the device provides of a device key Kd, a range of multiple BOOT-IMSls and a device identifier, Device-ID. The device key Kd, range of multiple BOOT-IMSIs and a device identifier, Device-ID, have been provisioned to the SIM card during SIM production or in a later SIM provisioning procedure.

The Host Network server provides of a Masterkey Km from which the device key Kd of the device and possibly device keys of further devices are derived. The Masterkey Km has been provided to the Host Network server in a production or provisioning phase and securely stored, preferably in a hardware security module HSM connected or connectable to the Host Network server.

Step [1]: The sensor device sends captured sensor data, captured immediately before or earlier, or other data or information to be transmitted to the background system, to the SIM card.

Step [2]: The SIM card randomly chooses a BOOT-IMSI from the range of BOOT-IMSIs, if required executes a REFRESH, if required sets "no-response-timeout", and sends the BOOT-IMSI to the device.

Step [3]: The device sends a bootstrap network attach attempt, using a SendAuthlnfo[SS7] message including the BOOT-IMSI, over the Visited mobile communication network to the Host Network server. The Host Network server detects a collision, i.e. that the chosen BOOT-IMSI is already in use by a different device/SIM.

After no response from the Host Network is received at the device/SIM, a "no-response-timeout" takes place, and the SIM card makes a new bootstrap attach attempt with a new selected BOOT-IMSI.

Step [4] shows a similar but successful bootstrap attach attempt in which no collision of BOOT-IMSls occurs.

Step [4]: The sensor device sends captured sensor data, captured immediately before or earlier, or other data or information to be transmitted to the background system, to the SIM card.

Step [5]: The SIM card randomly chooses a BOOT-IMSI from the range of BOOT-IMSIs, if required executes a REFRESH and sends the BOOT-IMSI to the device.

Step [6]: The device sends a bootstrap network attach attempt, using a SendAuthlnfo[SS7] message including the BOOT-IMSI, over the Visited mobile communication network to the Host Network server.

The SendAuthlnfo[SS7] message can for example be a 4G "Authentication-Information-Request" according to document [1] ETSI TS 124 008 V13.7.0.

Step [7]: The Host Network server generates a random SEED, and sends to the SIM card over the Visited mobile communication network a challenge message for a challenge-response authentication procedure, the challenge message comprising the random SEED in the RAND data field of the challenge message Also AUTN could optionally be used depending on the selected SEED size.

Step [8]: The SIM card derives a session key, Ks, based on its own device key, Kd, and the received SEED from the RAND data field of the challenge message. The SIM card hashes the data to be transmitted to generate a signature. The SIM card creates a ciphertext by encrypting, with the session key, Ks, the captured sensor data DATA-TX and the signature. The SIM card creates a packet including the device identifier, Device-ID, in plaintext, and the ciphertext (encrypted captured sensor data, and encrypted signature over hash of sensor data). The SIM card creates an authentication error message, and sends the packet in a data field of the authentication error message to the Host Network server over the Visited mobile network.

Step [9]: The Host Network server receives the packet and extract the device identifier, Device-ID, derives the device key, Kd, using the device identifier, Device-ID, and the Master Key, Km, from which the device key, Kd, has been derived.

The Host Network server derives the session key, Ks, from the derived device key, Kd and the SEED.

The Host Network server decrypts the ciphertext with the derived session key Ks and extract the captured sensor data DATA-READ. The Host Network server also verify that the signature received from the device is well formed to proceed with the next steps.

Step [10]: The Host Network server forwards the received and decrypted captured sensor data DATA-READ to the loT Provider server over an Application Programming Interface API. Optionally, before sending, the Host Network server re-encrypts the captured sensor data DATA-READ with an encryption scheme shared with the loT server. Alternatively, an end to end encryption mechanism could also be implemented between the device and the loT Provider. According to the present embodiment, the sending of the sensor data DATA-READ also includes a request from the Host Network server to the loT Provider server for write-data to be provided as a response to the device or to the SIM card, or both.

Step [11]: The loT Provider server sends to the Host Network server a response in which the DATA-WRITE to be written to the device or SIM card or both are included. In case not DATA-WRITE are available, no response or an information response that no DATA-WRITE are available is sent back from the IOT Provider server to the Host Network server.

Step [12]: In case DATA-WRITE are provided, the Host Network server encrypts the DATA-WRITE with the session key Ks previously derived in step 9 so as to generate a Data-Packet and sends to the SIM card the Data-Packet in the RAND data field of a further challenge message of a further Challenge-Response-Procedure. The data field AUTN of the challenge message is kept empty in this example, however may be optionally used for future purposes.

Step [13]: The SIM card receives the Data-Packet and decrypts it with the session key Ks, processes the DATA-WRITE intended for the SIM card itself, and sends DATA-WRITE intended for the device to the device, for processing by the device. The processing can imply for example storing data on the device, executing specific commands, trigger any specific action, such as but not limited to open a secondary communication channel or push a remote update , and the like.

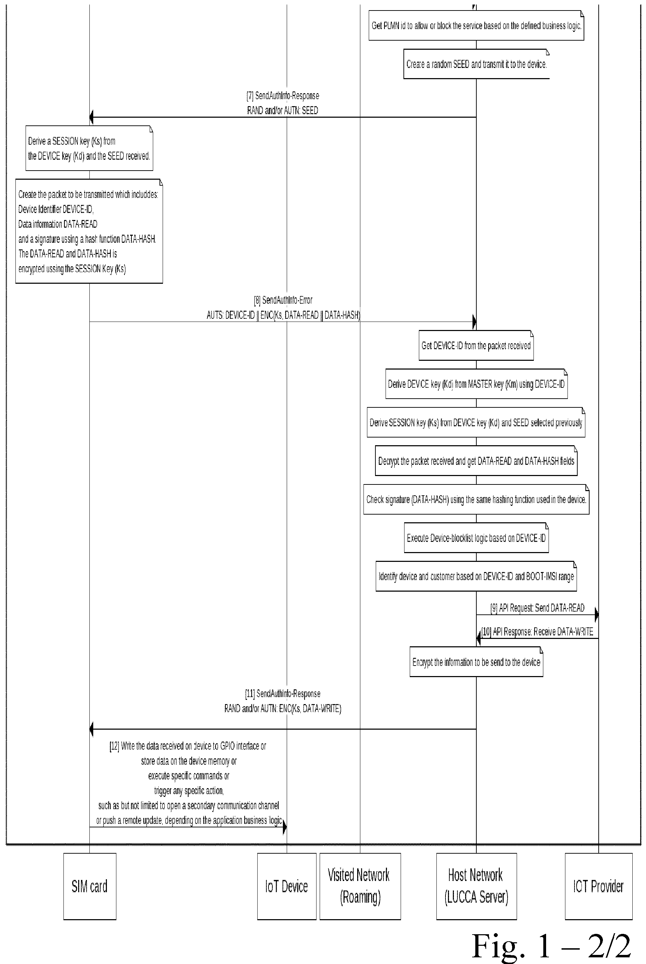

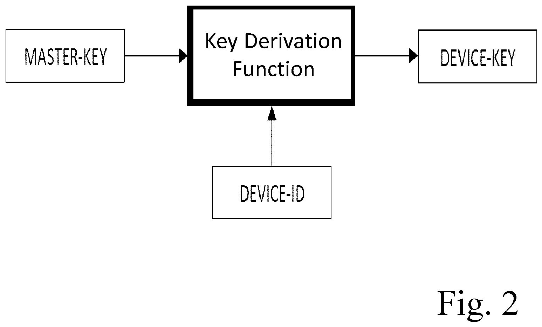

Fig. 2 shows an illustration of a key derivation scheme, according to a partial aspect of some embodiments of the invention. To derive the device key Kd of a distinct loT device, a Masterkey Km which is identical for multiple loT devices and an individual, possibly unique, device identifier Device-ID of the loT device are fed into a key derivation function. The key derivation function processes the input Masterkey Km and device identifier Device-ID of the loT device cryptographically and outputs the generated device key Kd.

### Cited documents

[1] ETSI TS 124 008 V13.7.0 (2016-10), Digital cellular telecommunications system (Phase 2+) (GSM); Universal Mobile Telecommunications System (UMTS); LTE; Mobile radio interface Layer 3 specification; Core network protocols; Stage 3" (3GPP TS 24.008 version 13.7.0 Release 13)
[2] EP2533485B1
[3] US10911937B2

## Claims

1. A method for secured exchange of data between an loT device and an loT background system over a mobile communication network,
wherein the loT device:
- comprises an interface constructed to allow exchange of data with the loT background system over a mobile communication network; and
- hosts a SIM constructed to authenticate the loT device versus the mobile communication network, the SIM providing of at least one BOOT-IMSI;
wherein the method comprises the steps:
a) ([4]) By the loT device, provide data-read (DATA-READ) to the SIM;
b) ([5]) By the SIM, provide a BOOT-IMSI to the loT device;
c) ([6]) By the loT device, send an attach request using the BOOT-IMSI to the loT background system over the mobile communication network;
d) ([7]) By the loT background system, provide, particularly receive or generate, a random SEED, and send to the SIM over the mobile communication network a challenge message for a challenge-response authentication procedure, the challenge message comprising the random SEED, the SEED particularly being comprised in the RAND field or/and the AUTN field of the challenge message;
e) ([8]) By the SIM: - create a packet including the data-read (DATA-READ);
- create an authentication error message and send the packet to the loT background system over the mobile network in the authentication error message.
f) ([8 - continued]) At the loT background system:
- receive the packet and extract the data-read (DATA-READ).

2. The method according to claim 1, wherein:
- the SIM further provides of a secret device key, Kd, of the loT device, which is derived from a Masterkey, Km, which is available to the loT background system, and a device identifier, Device-ID, of the loT device;
Step e) is performed as: e) ([8]) By the SIM:
- derive a session key, Ks, based on the device key, Kd, and the received SEED;
- create a ciphertext by encrypting, with the session key, Ks, at least the data-read (DATA-READ);
- create a packet including: the device identifier, Device-ID, and the ciphertext;
- create an authentication error message and send the packet to the loT background system over the mobile network in the authentication error message; and
Step f) is performed as: f) At the loT background system:
- receive the packet and extract the device identifier, Device-ID;
- derive the device key, Kd, using the device identifier, Device-ID and a Master Key, Km, from which the device key, Kd, is derived;
- derive the session key, Ks, from the derived device key, Kd and the SEED;
- decrypt the ciphertext with the derived session key and extract the data-read (DATA-READ).

3. The method according to claim 1 or 2, wherein the data-read (DATA-READ) comprise one or several of the following data:
- captured sensor data (DATA-READ) captured at a sensor comprised in or at the loT device;
- status information of the loT device or/and of the SIM;
- a notification message.

4. The method according to any of claims 1 to 3, wherein step a) ([4]), to provide data-read (DATA-READ) to the SIM, is triggered by a trigger event, wherein the trigger event is or comprises one of, or a combination of several of, the following:
- a wake-up event of the loT device, comprising switching the loT device from a less operational operation, particularly a stand-by or sleep operation mode, to a more operational operation mode, particularly a full-operational operation mode;
- receipt of sensor data at a sensor comprised in or at the loT device;
- a wake-up event of the SIM, comprising switching the SIM from a less operational operation, particularly a stand-by operation mode, to a more operational operation mode, particularly a full-operational operation mode;
- a request of the loT device to provide the data-read (DATA-READ) to the SIM;
- a request of the SIM to provide the data-read (DATA-READ) to the SIM.

5. The method according to any of claims 1 to 4, wherein the BOOT-IMSI is randomly selected from a range of BOOT-IMSIs provided in the SIM.

6. The method according to any of claims 1 to 5, wherein the BOOT-IMSI, or all BOOT-IMSIs from the range of BOOT-IMSIs, respectively, are registered with the loT background system as allowable BOOT-IMSIs for bootstrap attaching to the mobile communication network.

7. The method according to any of claims 1 to 6, comprising the further step:
g) ([10]) At the loT background system, retrieve data-write (DATA-WRITE) to be provided to the SIM, and ([11]) send the data-write (DATA-WRITE) to the SIM in a challenge message for a further challenge-response authentication procedure, the challenge message comprising the data-write (DATA-WRITE) in the RAND data field or/and the AUTN data field of the challenge message, wherein the data-write (DATA-WRITE) comprise one or several of:
- commands to be executed by the SIM or by the loT device;
- actions to be triggered by the SIM or by the loT device;
- information to be displayed, stored, processed or manipulated in the loT device;
- software or software updates to be installed in the SIM or in the loT device.

8. The method according to claim 6 or 7 in combination with claim 2, wherein the data-write (DATA-WRITE) are encrypted with the session key Ks prior to sending to the SIM or loT device.

9. The method according to any of claims 1 to 8, wherein the loT background system comprises at least:
- a Host network server receiving the request of step c), sending the challenge message of step d), and receiving the packet of step f);
- an loT Provider server installed for managing data-read (DATA-READ), and in case of claim 6 for providing data-write (DATA-WRITE).

10. The method according to any of claims 1 to 9, wherein, in step e), the packet is sent in a data field AUTS of the authentication error message.

11. The method according to any of claims 1 to 10, wherein,
in step e), for creating the ciphertext:
- a signature (DATA-HASH) is generated, which can be a signature over the data-read (DATA-READ), or a signature over a data hash using a hash function over the data-read (DATA-READ), or a data hash using a hash function over the data-read (DATA-READ); and
- both the data-read (DATA-READ) and the signature (DATA-HASH) are encrypted with the session key Ks; and
in step f), the signature is checked.

12. The method according to any of claims 1 to 11, wherein, in case the BOOT-IMSI sent in step c) causes a collision with a BOOT-IMSI already attached to the mobile communication network, the SIM selects, particularly randomly SELECTS, a BOOT-IMSI again and starts the procedure from step b) on again.

13. The method according to any of claims 1 to 12, wherein the device key, Kd, is a symmetric key securely stored in the SIM.

14. The method according to any of claims 1 to 13, wherein the device key, Kd, is derived from a Masterkey, Km, and a device identifier, Device-ID, of the device.

15. The method according to any of claims 1 to 14, executed several times in sequence to send an amount of data-read or/and data-write which is too large to send said amount in one single execution of the method.
